(19) **Europäisches Patentamt**

**European Patent Office**

**Office européen des brevets**

(11) **EP 0 641 865 B1**

(12) **EUROPEAN PATENT SPECIFICATION**

(45) Date of publication and mention
of the grant of the patent:
**31.05.2000 Bulletin 2000/22**

(21) Application number: **93923061.1**

(22) Date of filing: **12.10.1993**

(51) Int. Cl.[7]: **C22B 13/00**, C22B 13/02

(86) International application number:
**PCT/KZ93/00001**

(87) International publication number:
**WO 94/13844 (23.06.1994 Gazette 1994/14)**

(54) **METHOD OF REPROCESSING LEAD-CONTAINING MATERIALS**

VERFAHREN ZUR WIEDERAUFBEREITUNG BLEIHALTIGER MATERIALIEN

PROCEDE DE RETRAITEMENT DE MATIERES CONTENANT DU PLOMB

(84) Designated Contracting States:
**DE FR IT SE**

(30) Priority: **09.12.1992 KZ 920059**

(43) Date of publication of application:
**08.03.1995 Bulletin 1995/10**

(73) Proprietors:
- **VOSTOCHNY NAUCHNO-ISSLEDOVATELSKY GORNO-METALLURGICHESKY INSTITUT TSVETNYKH METALLOV
  Ust-Kamenogorsk, 492014 (KZ)**
- **OTKRYTOE AKZIONERNOE OBSHESTVO "KAZZINC"
  Ust-Kamenogorsk 492014 (KZ)**
- **TECNICOM GE S.r.l.
  16122 Genova (IT)**

(72) Inventors:
- **KULENOV, Akhat Salemkhaovich
  Ust-Kamenogorsk, 492014 (KZ)**
- **SANNIKOV, Yury Ivanovich
  Ust-Kamenogorsk, 492018 (KZ)**
- **GRININ, Yury Alexandrovich
  Ust-Kamenogorsk, 492018 (KZ)**
- **KASENOV, Nukezhan Satybaldievich
  Ust-Kamenogorsk, 492020 (KZ)**
- **KLIMOV, Vyacheslav Mikhailovich
  Ust-Kamenogorsk, 492010 (KZ)**
- **KLJUEV, Gennady Fedorovich
  Ust-Kamenogorsk, 492045 (KZ)**
- **LYAMINA, Maria Alekseevna
  Ust-Kamenogorsk, 492024 (KZ)**
- **OSPANOV, Nurlan Musagalievich
  Ust-Kamenogorsk, 492018 (KZ)**
- **SLOBODKIN, Leonid Vladimirovich
  Ust-Kamenogorsk, 492024 (KZ)**
- **USHAKOV, Nikolai Nikolaevich
  Ust-Kamenogorsk, 492018 (KZ)**
- **SHUKLIN, Alexei Geradievich
  Ekaterinburg, 620131 (RU)**
- **SHUMSKY, Viktor Alexandrovich
  Ust-Kamenogorsk, 492022 (KZ)**

(74) Representative:
**VOSSIUS & PARTNER
Siebertstrasse 4
81675 München (DE)**

(56) References cited:
EP-A- 0 124 497    EP-A- 0 125 223
EP-A- 0 126 053    EP-A- 0 153 913
DE-A- 3 233 338    DE-A- 3 415 813
DE-A- 3 811 594    DE-C- 3 804 809
FR-A- 2 532 660    US-A- 4 115 109
US-A- 4 519 836

## Description

The present invention relates to nonferrous metallurgy and, more particularly, to methods of processing lead-bearing materials of different origin.

The main task in the improvement of the processing of lead-bearing materials also containing zinc, copper and other valuable metals, is to develop methods of extracting the said metals from raw materials with minimum specific output of a process gas, and low consumption of energy carriers per 1 t of lead metal. The other task is to provide a possibility to treat both natural raw materials and lead-bearing materials produced in other industrial processes as by-products, whose storage is associated with great environmental hazards. The said objectives are achieved with the use of process oxygen at the step of smelting the lead-bearing materials that allows the energy expenditures in lead production to be decreased, and the output of process gas to be reduced. Such methods have the common advantage of allowing a raw material comparatively poor in lead content to efficiently undergo smelting thereby producing a gas rich in sulphurous anhydride content and a molten lead-containing slag from which the lead bullion can be produced by reduction. A variety of such methods being called autogenous is known. These methods allow raw materials of a varying range of quality to be processed. However this range is rather narrow (in terms of lead and zinc content, thermal properties of materials, size and phase composition of products). This is why at present a large group of lead-bearing materials such as residues, flue dusts from copper matte conversion, slurries, are not processed by known methods and pile up in dumps. Thus, as the afore-mentioned materials contain significant amounts of zinc and copper, non-ferrous metals accumulate in dumps, causing complicated environmental problems. Consequently, extending the range of processable lead-bearing material is a very urgent task for technology and environmental protection.

A method, of processing the fine-grain lead concentrates in admixture with recycle dust, fluxes, coal powder, and lead-containing materials such as residues, is known as QSL-process (K.Mager, A.Schelte, "Primary and Secondary Lead processing", Halifax, Nova Scotia, Canada, August 20-24, 1989, Ed.Pergamon Press, N.Y., pp.15-26). According to this method the mixture is granulated, and the thus produced granules have a moisture content of 8% are charged onto the surface of the oxide melt where 35 to 60% of lead is present in the form of oxides. An oxygen-containing gas is blown through this oxide melt and the lead metal layer under the melt. As a result of the interaction between the sulphides of the raw material and the lead oxides at a temperature of 850-950 °C, a lead bullion is formed, part of which passes to the oxide melt in result of lead oxidation by the oxygen-containing gas. A constantly high concentration of lead oxide and a predominance of the lead bullion formation rate over the rate of its oxidation by oxygen, is achieved by an adjustment of the granule feed rate and oxygen consumption. The continuously formed oxide melt having a temperature of no more than 950°C continuously flows to a reduction zone where the temperature of the slag builds up to 1150-1250 °C due to a gas heat-up as the slag moves to an outlet opening. At the same time the reduction of the lead oxides to lead bullion is achieved with the use of a coal-air mixture or natural gas-air mixture blown through the melt.

However, the presence of significant amounts of sulphates and oxides of metals, especially higher iron oxides, in a lead-containing starting material is not allowed in this method due to a temperature restriction at the oxidation stage (not higher than 950 °C) and, especially, at the reduction stage (not higher than 1250 °C). The reason for this restriction is that the processing rate goes down, the energy consumption (process oxygen, carbon fuel) goes up and the direct recovery of lead decreases due to an increase in the flue dust output (50% of the charge mass and more) when the content of simple and complex sulphates and oxides of metals is increased. And, at a 50-60% oxidation rate of iron in a lead-containing material the smelting process is completely disturbed due to the formation of a viscous oxide melt.

Moreover, a high output of process gas and consequently a high pollution of the environment by lead aerosols and sulphur compounds is characteristic for this method.

A method of processing lead-containing materials, lead and in particular lead-zinc concentrates has been developed, according to which a charge consisting of the said materials and fluxes is prepared. A mixture of quartz sand with limestone or lime is used as fluxes. The charge is dried to a moisture content of less than 1%. The dry charge together with recycle dust and crushed carboniferous material is supplied through a vertical burner for flash smelting in an oxygen atmosphere at a desulphurization rate close to 100%. In result of smelting, an oxide melt having a temperature of about 1400 °C, predominantly containing metal oxides and a mixture of recycle dust and the gas from oxidizing smelting, is produced. The reduction of the metal oxides, predominantly lead oxides, to the lead metal is effected by filtration of the oxide melt through a bed of crushed carboniferous material. In result of the reduction, a lead bullion, a matte, a zinc-containing slag poor in lead content and gaseous products of reduction are produced in admixture with recycle dust and gas from oxidizing smelting and are freed from gas and recycle dust. The recycle dust is returned to smelting and the gas is used for sulphur recovery. A lead depleted slag is charged into an electric furnace to separate the lead metal suspension and simultaneously, lead-containing zinc fumes are produced and collected in the form of zinc fumes. The slag and zinc fumes are used for zinc recovery (US-A-4 519 836).

This method has two substantial disadvantages:

1. The method does not allow the efficient processing of lead-containing materials where sulphur is present in the form of sulphates (such as lead residues, converter dust, for example) because metal sulphates (calcium, lead) have no time to decompose completely and are reduced, to sulphides in the bed of crushed carboniferous material. In result of sulphide sulphur formation, a matte of low grade is formed together with the lead bullion resulting in a lower direct lead recovery in the form of lead metal and a higher output of lead-containing dust.

To produce a better quality matte and decrease its output, the processing rate of lead stock smelting is to be lowered significantly in order to prolong the sulphate retention time in the flame, in the high temperature zone, thus increasing the degree of metal sulphate decomposition. However, this does not help much: due to high waste heat losses, the specific energy consumption goes up and the direct recovery of lead to lead metal is as low as 60 %.

2. The method is not efficient when processing lead-containing stock with a high content of higher iron oxides.

During stock smelting the higher iron oxides pass to the oxide melt altogether and decrease its initial fluidity. The fluidity of the melt is also additionally decreased during its reduction in the bed of carboniferous material because its depletion of low-melting PbO is quicker than that of $Fe_2O_3$ and because of the progressive accumulation of high-melting higher iron oxides which are reduced 2-3 times slower than PbO. The decrease of the fluidity results in a substantial drop of lead recovery and productivity to the extent that the reduction of lead oxides to metal ceases altogether.

The reduction of the higher iron oxides is accompanied by heat absorption considerably higher than for PbO and therefore, for this kind of stock, the temperature of the dispersed oxide melt drops rather steeply as it passes through the carboniferous bed. The heat flow to the bed of zinc-containing slag depleted in lead content is, however, rather insignificant (the slag is heated electrothermally). This is why, assuming a potential presence of iron in a charge, the said heat restriction requires the processing rate of the charge to be reduced several times when the iron in stock is completely oxidized to the higher oxides ($Fe_2O_3$).

On the other hand, a rise of 100 °C (from 1400 to 1500 °C) in the temperature of the dispersed oxide melt arriving at the carboniferous bed, is not enough to compensate for the heat consumption for the $Fe_2O_3$ reduction and provide a high productivity. Moreover, this requires high additional expenditure of energy (no less than 20 kg of pure carbon and 37.4 $nm^3$ of pure oxygen per 100 kg of ferric iron).

A decrease in productivity, however, does not help much in terms of lead recovery to the metal, as about 20% of lead remains in the zinc-containing slag.

So, the existing method is not efficient enough in the treatment of lead-containing materials where mostly simple and complex sulphates and oxides of metals including higher iron oxides, are present, and is characterized by a productivity decrease, energy input increase, and lead recovery decrease.

It is an object of the invention to change the operating conditions of the smelting process in the processing of lead-containing materials in order to increase productivity, decrease energy inputs and increase lead recovery.

It is another object of the proposed invention to provide a method of processing lead-containing materials which could make possible the processing of lead-containing materials of secondary sources such as, for example, lead residues, dusts of matte conversion and other materials of this sort, thus allowing the task of environment protection from pollution by finely dispersed products containing heavy non-ferrous metals to be achieved.

Yet another object of the present invention is the elaboration of a method, of processing lead-containing materials which could make possible the reduction emissions of hazardous substances thus providing environment protection.

Brief Description of the Essence of the Invention

The problem stated above is solved by the method of processing lead-containing materials where mostly simple and complex sulphates and oxides of metals including higher iron oxides are present comprising:

a) Preparing a wet charge from lead-containing starting materials and fluxes
b) Drying the charge produced at stage (a) to a moisture content of less than 1%
c) Flash smelting the dry charge in an atmosphere of oxygen whereby a dispersed oxide melt and a mixture of dust and smelting off-gas are produced
d) Reducing the oxide melt produced at stage (c) by its filtration through a bed of heated particles of crushed carboniferous material whereby a lead bullion, a lead depleted slag and gas are produced
e) Separating the mixture of dust and smelting off-gas produced at stage (c) and returning the dust to stage (c)
f) The preparation of the wet charge at stage (a) being performed by adding a sulphide powder material to obtain the mass ratio of sulphide, elemental and pyrite sulphur to total sulphur content in the charge from 0.08 to 0.87 and a carboniferous powder material in an amount of 4 to 12 kg of pure carbon per 100 kg of ferric iron and 20 to 140 kg of pure carbon per 100 kg of sulphate sulphur.

It is expedient to use a carboniferous material having a carbon gasification reaction activation energy within the range of $5.78 \times 10^4$ to $2.09 \times 10^5$ J/mole (13.8 to 50 kcal/mole).

It is desirable to feed a charge of a moisture content of 2 to 16% to the drying at stage (b).

In result of the said above, the proposed method allows:

- low grade lead-containing finely dispersed materials to be processed and at the same time the task of environment protection from pollution by the said products to be attained;
- the processing rate of the lead in the charge to be increased by more than 100,0 kg/h;
- the total expenditure of energy carriers (fuel, process oxygen) to be reduced by more than $4.18 \times 10^9$ J/tonne (1000 Mcal)/t of lead in the charge;
- up to 96.16% of lead to be extracted into the lead bullion, the main product of smelting.

Moreover the method, offers the side benefits:

- In result of fuel and process oxygen expenditure decrease, the smelting off-gas output is reduced and costs of environment protection (gas cooling and cleaning of dust) are reduced, respectively;
- Pollution of the environment by lead aerosols is reduced in proportion to the decrease of the smelting off-gas output.

The said and other merits of the proposed method will be seen from the detailed description of the invention set forth below.

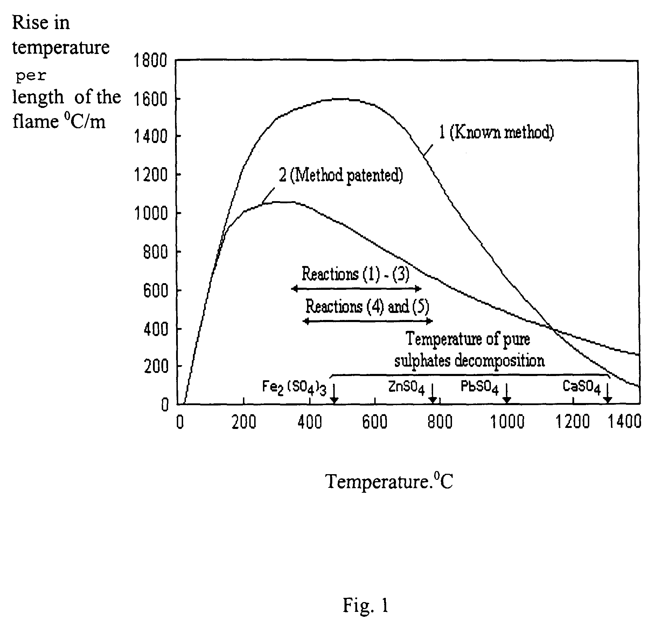

Fig. 1 shows a diagram reflecting the rise in temperature per length of the flame depending on the reaction temperature for the known method (curve 1) and the method according to the invention (curve 2) and

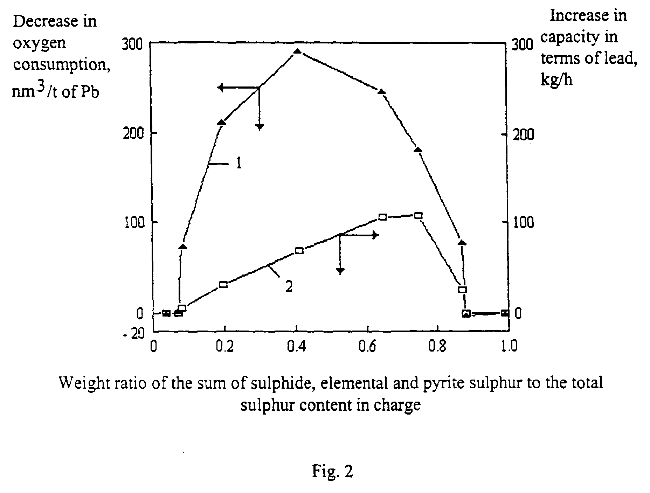

Fig. 2 shows a diagram reflecting the decrease in oxygen consumption and the increase in capacity as dependent on the weight ratio of sulphide, elemental and pyrite sulphur to the total sulphur content.

The preparation of a wet charge from lead-containing starting materials and fluxes at stage (a, f) is performed by adding a sulphide powder material to obtain the mass ratio of sulphide, elemental and pyrite sulphur to total sulphur content in the charge from 0.08 to 0.87.

This creates conditions for a temperature decrease in the decomposition of lead, calcium and other metals by 300-500°C in comparison with the temperature of their thermal decomposition in the known method because of the reactions that take place during succeeding flash smelting, of the following type:

$$MeS + 3\ MeSO_4 = 4\ MeO + 4\ SO_2 \tag{1}$$

$$MeS + 2\ MeSO_4 = Me + 2\ MeO + 3\ SO_2 \tag{2}$$

Owing to this, the decomposition of metal sulphates takes place in a temperature range optimum for heat radiation intensity, thus leading to an increase in the smelting process productivity and a reduction of energy inputs due to the low energy consumption of reactions (1), (2) in comparison with thermal decomposition reactions, in the known method. The further reduction of power inputs (by process oxygen) takes place due to the sulphate sulphur used as an oxidizer. In this way, the temperature of the dispersed oxide melt produced at stage (c) is kept at a level of 1400-1420 °C that is necessary for the further reduction of the melt in the bed of crushed carboniferous material at stage (d).

In parallel with the reactions indicated above a reaction of higher iron oxide reduction by the sulphide sulphur to FeO proceeds

$$3\ Fe_2O_3 + MeS = 6\ FeO + MeO + SO_2 \tag{3}$$

A bare handful of magnetite (higher iron oxides) remains in the dispersed oxide melt produced at stage (c) and therefore the said melt has a lower viscosity than in the known method which leads to an increase in lead recovery in the further reduction of the dispersed oxide melt at stage (d).

Where the mass ratio of the sum of sulphide, elemental and pyrite sulphur to the total sulphur content is lower than 0.08 the power inputs (oxygen and fuel consumption) must be significantly increased. The reason is that in this case the thermal dissociation reaction of sulphates partly prevails over energetically more advantageous reactions (1) - (3). Moreover, in this way the productivity of the smelting process in terms of lead bullions goes down due to a desulphurization rate decrease according to reactions (1) - (3), and lead recovery to lead bullion goes down as a result of matte formation and an increase of the lead content in the zinc-containing slag.

A rise in the mass ratio of the sum of sulphide, elemental and pyrite sulphur to total sulphur content in a wet charge over 0.87 decreases process productivity due to too intensive heat emission during charge desulphurization in an oxygen atmosphere and impairs the lead recovery to the lead bullion due to low grade matte formation.

According to the proposed method, when preparing the wet charge at stage (a, f), it is worthwhile to supply carboniferous powder material in an amount of 20 to 140 kg of pure carbon per 100 kg of sulphate sulphur contained in the charge. In this manner, finely dispersed particles of sulphates are reduced by powder particles of carboniferous material during flash smelting at stage (c) according to a reaction of the following type:

$$MeSO4 + 2 C = MeS + 2 CO2 \tag{4}$$

wherein "amorphous" sulphides formed with sulphates and higher iron oxides according to reactions (1) - (3) interact quickly with oxygen according to the reaction

$$MeS + 1.5 O2 = MeO + SO2 \tag{5}$$

whereby sulphur is recovered in the gas phase.

Reactions (4) and (5), as well as reactions (1) - (3), are started and practically finished in a temperature of range of 350-700 °C in the case of lead, zinc, calcium sulphates (and iron sulphates, also). Energy inputs are decreased and the smelting process productivity is increased with a decrease in the sulphate decomposition temperature (e.g. pure $CaSO_4$ is decomposed only at a temperature of more than 1300 °C).

A carboniferous powder material consumption at stage (a, f) from 20 to 140 kg of pure carbon per 100 kg of sulphate sulphur is enough for the smelting process to proceed efficiently.

If the consumption of the carboniferous powder material at stage (a, f) is lower than 20 kg of pure carbon per 100 kg of sulphate sulphur in the charge, then the smelting process efficiency goes down. The reason is that it leads to a reduction of the contact area of the reacting phases and a decrease in the rate and degree of reaction (4). In result the charge desulphurization drops and the specific heat input per weight unit of sulphate sulphur in the charge increases. The charge desulphurization rate decrease leads to a drop of the smelting productivity, an increase of the low grade matte production and a corresponding decrease in the lead recovery to the lead bullion during lead oxide reduction in the bed of carboniferous material at stage (d).

A consumption of the carboniferous powder material of more than 140 kg of pure carbon per 100 kg of sulphate sulphur is not reasonable.

According to the patented method, lead-bearing materials with a high content of ferric iron oxides represented by such compounds as zinc and lead ferrites, ghoetite (FeOOH), hematite ($Fe_2O_3$), and a number of jarosites, can be also treated. If these materials are subjected to smelting according to the known method a highly viscous oxide melt forms resulting in a productivity decrease and higher energy inputs.

According to the patented method, a low viscous oxide melt is produced at stage (c). PbO reduction from the melt at stage (d) poses no problems because a carboniferous powder material is added during wet charge preparation at stage (a, f) in an amount of 4 to 12 kg of pure carbon per 100 kg of ferric iron. The fact is that the carbon, during smelting at a temperature of 500°C, reduces higher iron oxides to FeO:

$$2 Fe2O3 + C = 4 FeO + CO2 \tag{6}$$

If the temperature, at which this endothermal reaction proceeds, is the same as the temperature of the most intensive heat emission in the flash smelting process, the rate of reaction (6) and reduction of $Fe_2O_2$ to FeO is as high as 70-85%. Therefore, an oxide melt of low viscosity is produced in result of smelting thus providing an increase in the lead recovery and productivity of the process during oxide melt reduction at stage (d) and a decrease in energy carriers consumption (carboniferous material).

When the consumption of the carboniferous powder material is lower than about 4 kg of pure carbon per 100 kg of ferric iron, the degree of reaction (6) goes down and during the further PbO reduction in the bed of carboniferous material, complications arise due to the formation of a viscous oxide melt causing an increase in energy inputs and decrease in productivity and lead recovery.

A consumption of the carboniferous powder material of more than 12 kg of pure carbon per 100 kg of ferric iron is unreasonable as far as it does not lead to an improvement of smelting process performances. Along with separate insertion of powder sulphide or carboniferous powder material to the charge during its preparation at stage (a, f), the invention envisages a simultaneous use thereof. The use of sulphide powder material is preferable in cases where the higher iron oxide content in the lead-bearing starting material does not exceed 20-30 mass% based on the total content, and the use of carboniferous powder materials is expedient where the said oxide content is more than 50-80 mass% based on the total iron content. In intermediate cases both powder materials are used at the same time.

It is shown experimentally that the highest rate of metal sulphate and higher iron oxide decomposition during flash smelting at stage (c) according to reactions of type (4) and (6) in a temperature range of 400-600°C is achieved when carboniferous powder material of high reactivity characterized by a carbon gasification reaction activation energy (E) of 5.78 x $10^4$ to 2.09 x $10^5$ J/mole (13.8 to 50 kcal/mole) is used at stage (a,f). This material can be, for example, charcoal and black coal, of clinker carbon from the Waelz process.

The carbon gasification reaction activation energy can be defined according to a standard technique of kinetic studies (for instance, Wandland U. "Thermic methods of analysis", "Mir", 1978, 515 PP.) or taken from reference sources.

A charge with a moisture content from 2 to 16% is supplied to drying at stage (b) and helps to efficiently reduce ferric oxides and sulphate sulphur during charge smelting at stage (c). The adhesive properties of finely dispersed residue particles, lead dust or other similar lead-bearing starting materials in relation to particles of sulphide powder and carboniferous materials inserted during charge preparation at stage (a, f) show up better at said moisture content.

The wet charge prepared is dried at stage (b) up to a moisture content of less than 1%. In consequence the individual particles of the wet charge become bigger, and rather strong, and form conglomerates due to agglomeration thus providing the contact of components necessary for reactions (1) - (4) and (6) and accelerating the reactions.

Moreover, the formation of the coarse and strong conglomerates of particles provides minimum output of dust fractions during wet charge drying at stage (b).

The dry charge produced at stage (b) in admixture with oxidized recycle dust from stage (e) and crushed carboniferous material (e.g. coke, black coal) is directed to flash smelting in an oxygen atmosphere at stage (c). There the material is heated up and molten in response to high temperatures and sulphide and carboniferous powder materials reduce the sulphates of metals and ferric iron oxides in a temperature range of 350-700°C. Charge smelting at stage (c) results in the production of a dispersed oxide melt and a mixture of dust and smelting off-gas. At the same time, the particles of crushed carboniferous material are heated to a high temperature but have no time to burn due to their relatively large size and the quick decrease of the oxygen content in the gas phase along the vertical extent of the smelting shaft (the oxygen content in the gas phase above the bath surface is about 1%), so that essentially all crushed carboniferous material is hot when it arrives at the melt surface to form the carboniferous bed and replenishes it continuously.

The oxide melt produced at stage (c) in the form of fine droplets passes at stage (d) through the said carboniferous bed where the lead oxides are reduced, by the carbon, producing the lead bullion, the zinc-containing lead depleted slag and gas at stage (d).

Dust-laden sulphurous gas produced during the flash smelting at stage (c) is freed from the dust in an electrostatic precipitator. The dust collected in the precipitator is continuously returned together with the charge to the flash smelting at stage (c) and clean gas goes to sulphuric acid production.

The lead bullion produced at stage (d) in result of oxide melt reduction by crushed carboniferous material is separated from the zinc-containing slag and directed to refining by known methods.

The zinc-containing slag is subjected to known treatments such as fuming and the Waelz process in order to recover zinc in the form of oxide fumes that are treated further by a leaching process.

So, the proposed method of processing low grade lead-bearing materials enables a significant increase in the process productivity, decrease of power inputs and increase in the lead recovery to the lead bullion.

For a better understanding of the present invention, examples are given below illustrating the proposed method.

Example 1. According to the known method, lead-bearing residues from zinc production containing simple and complex sulphates and oxides of metals including higher iron oxides, were processed at a pilot plant. This lead-bearing material had the following composition, mass%: lead - 19.5, zinc - 14.2, copper - 1.3, iron total - 22.0 (including ferric iron - 19.4.), sulphur total - 5.94 (including sum of sulphide, elemental and pyrite sulphur - 0.2), silica - 5.3, calcium oxide - 0.7, alumina - 1.0, magnesium oxide - 0.2. Quartz sand and limestone were added at stage (a) to the lead-bearing material as fluxes in an amount of 17.49 kg per 82.51 kg of the lead-bearing material. The charge produced had the following composition in terms of dry substance, mass%: lead - 16.1, zinc - 11.7, iron total - 18.4, sulphur total - 4.9 (including sum of sulphide, elemental and pyrite sulphur - 0.17). This charge was dried at stage (b) up to a residual moisture content of 0.2%. The dried charge was mixed with the recycle dust and crushed coke that was used as a reductant for the formation of the carboniferous bed and was fed through a burner to the smelting at stage (c) in a vertical smelting shaft into which coke powder serving as a fuel and oxygen were fed in amounts permitting the complete burning of the carbon according the reaction:

$$C + O_2 = CO_2$$

The lead-bearing material and the fluxes were passed to the oxide melt and the crushed coke fell down onto the slag bath surface thereby forming a heated carboniferous bed. The oxide melt produced at stage (c) seeped through the bed and the lead oxides were reduced at stage (d) to the metal, and zinc remained in the slag. In result a lead bullion, zincous slag, copper matte and dust-bearing gas were produced, the gas was cooled and freed from the dust at stage (e), the dust was continuously returned to the smelting at stage (c) together with the charge.

During the experiment the smelting mode was controlled in respect of charge desulphurization and melt temperature. For this purpose the oxide melt was sampled before being passed to the carboniferous bed, and the samples were analyzed for their sulphur content. At the same time the temperature was measured at the same point, and adjusted to an optimum level of 1400-1420 °C through a change of the charge, fuel and oxygen rate.

In the optimum mode of processing lead-bearing materials the following performances were obtained:

| Processing rate | |
|---|---|
| of the lead-bearing material | 435 kg/h |
| of the charge | 527 kg/h |
| of the lead in the charge | 84.85 kg/h |
| Powder coke (fuel) consumption in terms of pure carbon | 75.3 kg/h |
| Oxygen consumption in terms of pure oxygen | 141 nm$^3$/h |
| Crushed coke consumption | 13.2 kg/h |
| Total consumption of energy carriers (fuel, oxygen, crushed coke) per 1 t of lead in the charge | 24.96x10$^9$J (5962 Mcal) |

The following smelting products were obtained, mass %:

| Lead bullion: | lead - 97, copper - 0.54, |
|---|---|
| Matte: | lead - 35, zinc - 12, copper - 14 |
| Slag: | lead - 7, zinc - 16, copper - 0.5 |
| Electric furnace fumes: | lead - 30, zinc - 44 |

Lead recovery for this example is, %:

| To lead bullion | 57.69 |
|---|---|
| To matte | 10.77 |
| To slag | 28.05 |
| To electric furnace fume | 3.08 |

The results obtained are shown in Table 1, experiment 1.

Example 2. The objective of this experiment was to define consumption coefficients and lead recovery indices when processing a sulphide powder material as far as this sort of material can be properly treated by a known method.

According to the known method, a sulphide lead-bearing material of the following composition was treated, mass %: lead - 57.3, zinc - 7.0, copper - 1.5, iron - 9.6, sulphur total - 20.2 (including the sum of sulphide, elemental and pyrite sulphur - 20.0), silica - 2.3, calcium oxide - 0.15, alumina - 0.5, magnesium oxide - 0.3. Limestone and quartz sand were added as fluxes to this material at stage (a) in an amount of 9.94 kg per 90.06 kg of the sulphide material. The wet charge obtained had the following composition in terms of a dry substance, mass %: lead - 51.6, zinc - 8.2, iron - 5.6, sulphur - 18.20 (including the sum of sulphide, elemental and pyrite sulphur - 17.65).

Further, the method was effected as in Example 1 but was different in that the coke powder (fuel) was not used.

In the optimum mode of processing, the following performances were obtained for this example:

| Processing rate | |
|---|---|
| of the lead-bearing material | 720 kg/h |
| of the charge | 800 kg/h |
| of the lead in the charge | 412.8 kg/h |
| Oxygen consumption in terms of pure oxygen | 147.4 nm$^3$/h |
| Crushed coke consumption | 39.6 kg/h |
| Total consumption of energy carriers (oxygen, crushed coke) per 1 t of lead in the charge | 2.29 x 10$^9$ J (548 Mcal) |

The following smelting products were obtained, mass %:

| Lead bullion: | lead - 96.9, copper - 0.79 |
|---|---|
| Matte: | lead - 41, zinc - 11, copper - 12 |
| Slag: | lead - 3.2, zinc - 17, copper - 0.4 |
| Electric furnace fumes: | lead - 40, zinc - 34. |

The results obtained are shown in Table 1, experiment 2.

Example 3. According to the proposed method, limestone and quartz sand were added as fluxes to a lead-bearing material of the same composition as in Example 1 at stage (a, f) as well as different amounts of sulphide powder material of the same composition as in Example 2. This charge containing 8% moisture was directed to drying at stage (b) up to a residual moisture content of 0.2%. The dried charge was mixed with the oxidized recycle dust and crushed coke. This mixture was directed to smelting at stage (c) in a vertical shaft into which a coke powder and process oxygen were fed at the same time as an auxiliary fuel.

The method was carried out as in Example 1.

An appropriate calculated value was obtained by the following formula on the basis of the total energy carrier consumption (crushed coke, fuel, oxygen) and the processing rate of the lead in the charge obtained in Examples 1 and 2: calculated value = (amount of lead-bearing material in a charge) x (process parameter according to Example 1) x (amount of reductant in a charge) x (process parameter according to Example 2) . These amounts were calculated without considering the amount of fluxes.

Then a difference between the experimental value of the process parameter and the calculated value thereof was defined on the basis of the experiment results of Example 3. In so doing, an additional effect was defined arising when the lead-bearing residues and the sulphide powder material were processed together.

The results of experiments with different mass ratios of the sum of sulphide, elemental and pyrite sulphur to the total sulphur content of the wet charge are shown in Table 1, experiments 3-10.

As is seen from Table 1 (experiments 1-10), an increase in capacity (column 5), decrease in power inputs (column 6) and increase in lead recovery to the lead bullion (column 7) are achieved simultaneously when the mass ratio of the sum of sulphide, elemental and pyrite sulphur to the total sulphur in the charge is within the range of 0.08 to 0.87.

Example 4. The method was effected as described in Example 3 but was different in that, instead of the sulphide powder material used in Example 2, different amounts of sulphide powder material were added to the lead-bearing materials and fluxes at stage (a, f) the lead-bearing materials having the following composition, mass%: lead - 17.3, zinc - 12.1, iron - 22.19, copper - 1.57, sulphur - 34.64 (sulphide, elemental and pyrite sulphur and less than 0.01 mass % of sulphate sulphur), silica - 4.44, calcium oxide - 0.16, alumina - 0.61, magnesium oxide - 0.12. Said material was a mixture of lead ore and lead concentrate.

The results obtained are shown in Table 1, experiments 11-16.

As is seen from Table 1 (Experiments 1, 11-16), the given task is attained when the mass ratio of the sum of sulphide, elemental and pyrite sulphur to the total sulphur content of the wet charge is within the range of 0.08 to 0.87, the same as in Example 3.

Example 5. A lead-bearing material as used in Example 1 was processed according to the proposed method. Quartz sand and limestone were added to the material at stage (a, f) as fluxes and carboniferous powder material, namely black coal, whose carbon gasification reaction activation energy was $1.39 \times 10^5$ J/mole (33.2 kcal/mole), was inserted. The charge produced, having a moisture content of 8%, was directed to drying at stage (b). The dried charge having a moisture content of 0.2% was mixed with oxidized recycle dust and crushed coke and injected through a burner into a smelting shaft at stage (c). At the same time, coke powder serving as a fuel and a stoichiometric quantity of oxygen calculated for complete burning of the fuel injected ($1.87$ nm$^3$ per 1 kg of pure carbon), were fed into the shaft. Then the method was effected as described in Example 1. The consumption of carboniferous powder material, fuel, oxygen, crushed coke was included in to the total consumption of energy carriers.

The results obtained are shown in Table 2, experiments 17-22. As is seen from Table 2, an increase in the processing rate of the lead in the charge (column 6), decrease in total consumption of energy carriers including fuel in the form of carboniferous powder material, oxygen, crushed coke (column 7), and an increase in lead recovery (column 8) is achieved simultaneously when the consumption of the carboniferous powder material is within the range of 4 to 12 kg of pure carbon per 100 kg of ferric iron and 20 to 140 kg of pure carbon per 100 kg of the sulphate sulphur.

Example 6. The method was effected as described in Example 5 (experiment 19) but differed in that the sulphide powder material according to Example 3 (experiment 5) was inserted additionally into the charge at stage (a, f).

In the optimum mode of processing the following processing parameters were obtained:

| Processing rate | |
|---|---|
| of the charge | 839 kg/h |
| of the lead in the charge | 154.3 kg/h |
| Crushed coke consumption | 19 kg/h |
| Total consumption of energy carriers (fuel, carbonifercarboniferous powder material, oxygen, crushed coke) per 1 t of lead in the charge | $1.82 \times 10^{10}$ J (4360 Mcal) |
| Lead recovery in the lead bullion | 95.96% |

As is seen from the results obtained, the processing rate and lead recovery is better than in experiment 5 (Table 1, columns 3 and 7) and experiment 19 (Table 2, columns 6 and 8). Moreover, the total consumption of energy carriers in this case - $1.82 \times 10^{10}$ J (4360 Mcal)/t of lead - is lower than in Example 1 - $2.49 \times 10^{10}$ J (5962 Mcal)/t of lead - and in Example 5 (experiment 19) - $2.01 \times 10^{10}$ J (4820 Mcal)/t of lead.

Example 7. The method was effected as described in Example 5 (experiment 19) but differed in that the carboniferous powder material of different carbon gasification reaction activation energy E (kcal/mole), including charcoal, black coal, half-coke, coke, electrode graphite, was used at stage (a, f). In this manner, the total consumption of energy carriers in experiments 19 and 23-30 was constant. The results obtained are shown in Table 3, experiments 23-30.

As is seen from Table 3, the simultaneous increase in the processing rate and lead recovery to the lead bullion is achieved when using a carboniferous powder material with a carbon gasification reaction activation energy within the range from $5.78 \times 10^4$ to $2.09 \times 10^5$ J/mole (13.8 to 50 kcal/mole).

Example 8. The method was effected as described in Example 6 but differed in that the charge of different moisture content was fed to drying at stage (b) and drying was effected up to the same residual moisture content of 0.2% in the charge.

The results obtained for this example in optimum modes of smelting are shown in Table 4, experiments 32-36.

As follows from the data shown (see also Example 6) the given task is attained when the charge with a moisture content of 2 to 16% is subjected to drying.

Example 9. According to the proposed method, limestone and quartz sand were added at stage (a, f) to a wet lead-bearing material being converter dust of the following composition, mass %: lead - 39.8, zinc - 11.7, copper - 2.0, iron - 3.0, total sulphur - 8.0 (including the sum of sulphide, elemental and pyrite sulphur - 0.1), silica - 0.7, calcium oxide - 1.0; a sulphide powder material according to Example 2 was also inserted in the amount required to obtain a mass ratio of the sum of sulphide, elemental and pyrite sulphur to the total sulphur content in the wet charge, rated at 0.75. The charge obtained, having a moisture content of 8%, was directed to drying at stage (b) up to a residual moisture content of 0.2%. The dried charge was mixed with oxidized recycle dust and crushed coke and fed through a burner to smelting at stage (c) in a vertical shaft into which a coke powder serving as a fuel and process oxygen were injected at the same time.

The method was effected as described in Example 1.

The following process parameters were obtained in the optimum smelting mode:

| Processing rate | |
|---|---|
| of the charge | 850 kg/h |
| of the lead in the charge | 377 kg/h |
| Crushed coke consumption | 18.9 kg/h |
| Total consumption of energy carriers (fuel, oxygen, crushed coke) per 1 t of lead in the charge | $1.26 \times 10^8$ J (301 Mcal) |
| Lead recovery to lead bullion | 85.5% |

Table I

## Mass Ratio of Sum of Elemental, Sulphide and Pyrite Sulphur to Total Sulphur in the Charge in Relation to Process Parameters of Lead-bearing Material

| No. of exper. | Mass ratio of sum of sulphide, elemental and pyrite sulphur to total sulphur content in the charge | Processing rate of the lead in the charge, kg/h | Total consumption of energy carriers, J/t (Mcal/t) of lead | Change of process parameter relative to calculated value | | Lead recovery in smelting products, % | | | |
|---|---|---|---|---|---|---|---|---|---|
| | | | | Increase in the processing rate of the lead in the charge, kg/h | Decrease in total consumption of energy carriers, J/t (Mcal/t) of lead in charge | in the lead bullion | in the slag | in the matte | in the electric funace fume |
| 1 | 2 | 3 | 4 | 5 | 6 | 7 | 8 | 9 | 10 |
| 1 | 0.033 | 84.85 | $2.49 \times 10^{10}$ (5962) | 0 | 0 | 57.69 | 28.05 | 10.77 | 3.08 |
| 2 | 0.99 | 412.8 | $2.29 \times 10^{9}$ (548) | 0 | 0 | 90.63 | 1.75 | 5.67 | 1.57 |
| 3 | 0.07 | 86.96 | $2.42 \times 10^{10}$ (578l) | -1.1 | 0 | 73.74 | 19.42 | 4.88 | 1.76 |
| 4 | 0.08 | 95.12 | $2.10 \times 10^{10}$ (5019) | 5.4 | $1.07 \times 10^{9}$ (256) | 92.76 | 5.38 | - | 1.44 |
| 5 | 0.20 | 138.7 | $1.15 \times 10^{10}$ (2769) | 32.5 | $3.18 \times 10^{9}$ (761) | 95.83 | 2.96 | - | 0.82 |
| 6 | 0.41 | 208.6 | $4.93 \times 10^{9}$ (1178) | 69.6 | $4.32 \times 10^{9}$ (1032) | 96.16 | 2.78 | - | 0.67 |
| 7 | 0.65 | 305.3 | $1.88 \times 10^{9}$ (451) | 106.8 | $3.71 \times 10^{9}$ (888) | 95.74 | 2.79 | - | 1.07 |
| 8 | 0.75 | 345.6 | $1.87 \times 10^{9}$ (449) | 108.3 | $2.66 \times 10^{9}$ (637) | 95.52 | 2.81 | - | 1.26 |
| 9 | 0.87 | 329.5 | $2.94 \times 10^{9}$ (704) | 26.6 | $1.09 \times 10^{9}$ (261) | 95.13 | 2.99 | - | 1.48 |
| 10 | 0.88 | 326.4 | $4.07 \times 10^{9}$ (973) | 0.5 | $-7.11 \times 10^{7}$ (-17) | 91.19 | 2.89 | 4.05 | 1.42 |
| 11 | 0.07 | 84.32 | $2.49 \times 10^{10}$ (5968) | 0 | 0 | 71.23 | 21.24 | 5.02 | 2.11 |
| 12 | 0.08 | 88.40 | $2.09 \times 10^{10}$ (5014) | 5.7 | $2.80 \times 10^{9}$ (669) | 91.87 | 5.07 | - | 2.66 |
| 13 | 0.50 | 151.7 | $6.91 \times 10^{9}$ (1652) | 75.3 | $5.49 \times 10^{9}$ (1312) | 92.81 | 2.98 | - | 3.82 |
| 14 | 0.87 | 86.95 | $1.26 \times 10^{10}$ (3018) | 16.1 | $1.43 \times 10^{9}$ (342) | 92.67 | 3.12 | - | 3.81 |
| 15 | 0.88 | 69.87 | $1.69 \times 10^{10}$ (4049) | 0 | 0 | 84.12 | 6.60 | 4.93 | 3.94 |
| 16 | 1.00 | 67.32 | $6.12 \times 10^{9}$ (1463) | 0 | 0 | 77.07 | 11.16 | 7.21 | 4.15 |

Table 2

Consumption of Carboniferous Powder Material Inserted in the Charge in Relation to Process Parameters of Lead-bearing Material

| No. of exper | Consumption of carboniferous powder material per pure carbon, calc. in kg/100 kg | | Total consumption of carbon material per pure carbon, calc. in kg/t of lead-bearing material | Total consumption of carbon material and fuel per pure carbon, calc. in kg/t of lead in the charge | Processing rate of the lead in the charge, kg/h | Total consumption of energy carriers, J/t (Mcal/t) of lead in the charge | Lead recovery to lead bullion, %. |
|---|---|---|---|---|---|---|---|
| | ferric iron | sulphate sulphur | | | | | |
| 1 | 2 | 3 | 4 | 5 | 6 | 7 | 8 |
| 1 | 0 | 0 | 0 | 888 | 84.85 | $2.49 \times 10^{10}$ (5962) | 57.69 |
| 17 | 3.85 | 19 | 18.38 | 924 | 84.26 | $2.58 \times 10^{10}$ (6165) | 72.51 |
| I8 | 4.0 | 20 | 19.2 | 838 | 90.51 | $2.37 \times 10^{10}$ (5675) | 92.75 |
| 19 | 8.O | 80 | 61.4 | 687 | 106.1 | $2.01 \times 10^{10}$ (4820) | 93.98 |
| 20 | 12.0 | 140 | 103.6 | 815 | 109.4 | $2.39 \times 10^{10}$ (5715) | 95.62 |
| 21 | 12.5 | 142 | 105.8 | 893 | 109.4 | $2.50 \times 10^{10}$ (5988) | 95.61 |
| 22 | 14.0 | 150 | 113.3 | 951 | 109.2 | $2.64 \times 10^{10}$ (6319) | 95.60 |

## EP 0 641 865 B1

Table 3

| Carboniferous Powder Material Gasification Reaction in Relation to Process Parameters of Lead-bearing Material | | | | |
|---|---|---|---|---|
| Exper. number | E, J/mole (kcal/mole) | Processing rate of the lead in the charge, kg/h | Lead recovery to lead bullion | Carboniferous material used |
| 1 | 2 | 3 | 4 | 5 |
| 1 | - | 84.85 | 57.69 | without carboniferous material |
| 19 | $1.39 \times 10^5$ (33.2) | 106.1 | 93.98 | black coal |
| 23 | $5.78 \times 10^4$ (13.8) | 108.0 | 94.45 | charcoal |
| 24 | $8.16 \times 10^4$ (19.5) | 107.5 | 94.17 | black coal |
| 25 | $1.76 \times 10^5$ (42.0) | 104.3 | 93.22 | black coal |
| 26 | $2.07 \times 10^5$ (49.5) | 96.7 | 92.02 | coke |
| 27 | $2.09 \times 10^5$ (50.0) | 84.2 | 90.92 | half-coke |
| 28 | $2.43 \times 10^5$ (58.1) | 82.1 | 86.05 | coke |
| 29 | $2.76 \times 10^5$ (66.0) | 79.3 | 82.31 | coke |
| 30 | $3.14 \times 10^5$ (75.0) | 79.1 | 80.17 | electrode graphite |
| Note: A matte formation is observed in experiments 29-30. | | | | |

Table 4

| Charge Moisture Content in Relation to Process Parameters of Lead-bearing Material | | | | |
|---|---|---|---|---|
| Experiment number | Moisture content of the charge fed to drying % | Processing rate of the lead in the charge kg/h | Lead recovery to lead bullion, % | Total consumption of energy carriers J/t (Mcal/t) of lead in the charge |
| 1 | 2 | 3 | 4 | 5 |
| 19 | 8.0 | 154.3 | 95.96 | $1.82 \times 10^{10}$ (4360) |
| 31 | 1.5 | 85.6 | 69.21 | $3.20 \times 10^{10}$ (7665) |
| 32 | 2.0 | 114.2 | 94.00 | $1.98 \times 10^{10}$ (4752) |
| 33 | 3.2 | 118.5 | 94.11 | $1.94 \times 10^{10}$ (4638) |
| 34 | 14.1 | 160.2 | 95.98 | $1.80 \times 10^{10}$ (4320) |
| 35 | 16.0 | 164.1 | 96.02 | $1.79 \times 10^{10}$ (4295) |
| 36 | 18.4 | 164.1 | 96.02 | $1.79 \times 10^{10}$ (4295) |
| Note: A matte formation is observed in experiments 29-30. | | | | |

**List of Designations Used in Claims and Description of the Invention**

a - stage of wet charge preparation;
b - stage of drying the charge produced at stage (a, f)

c - stage of the dry charge smelting;

d - stage of reduction of the oxide melt produced at stage (c)

e - stage of separation of dust mixture produced at stage (c) from smelting off-gas and recycle of the dust.

f - amount of sulphide and carboniferous materials fed to wet charge

**Claims**

1. A method of processing lead-bearing materials where simple and complex sulphates and oxides of metals including higher iron oxides are present, comprising:

   a) preparing a wet charge from lead-bearing starting materials and fluxes

   b) drying the charge produced at stage (a) up to a residual moisture content of less than 1%

   c) flash smelting the dry charge in an oxygen atmosphere whereby a dispersed oxide melt and a mixture of dust and smelting off-gas are produced

   d) reducing of the oxide melt produced at stage (c) by its filtration through a bed of heated particles of crushed carboniferous material whereby a lead bullion, a zinc-containing, lead depleted slag and gas are produced

   e) separating the dust mixture produced at stage (c) from the smelting off-gas and returning the dusts to stage (c)

   wherein

   f) the wet charge preparation at stage (a) is performed by adding a sulphide powder material to obtain the mass ratio of the sum of sulphide, elemental and pyrite sulphur to total sulphur content in the charge from 0.08 to 0.87 and a carboniferous powder material in an amount of 4 to 12 kg of pure carbon per 100 kg of ferric iron and 20 to 140 kg of pure carbon per 100 kg of sulphate sulphur.

2. The method according to claim 1, wherein a carboniferous material of carbon gasification reaction activation energy within the range from $5.78 \times 10^4$ to $2.09 \times 10^5$ J/mole (13.8 to 50 kcal/mole) is used as a carboniferous powder material to be used at stage (f).

3. The method according to claim 1, wherein a charge having a moisture content from 2 to 16% is fed to drying at stage (b).

**Patentansprüche**

1. Verfahren zum Verarbeiten bleihaltiger Materialien, wobei einfache und komplexe Sulfate und Oxide von Metallen einschließlich höherer Eisenoxide vorhanden sind, mit den Verfahrensschritten:

   a) Herstellen einer feuchten Beschickung aus bleihaltigen Anfangsmaterialien und Flußmitteln,

   b) Trocknen der in der Stufe (a) erzeugten Beschickung bis zu einem Restfeuchtigkeitsanteil von weniger als 1 %,

   c) Schweberöstschmelzen der trockenen Beschickung in einer Sauerstoffatmosphäre, wodurch eine dispergierte Oxidschmelze und eine Mischung von Staub und Schmelz-Abgas erzeugt werden,

   d) Reduzieren der in der Stufe (c) erzeugten Oxidschmelze durch Filtrieren von ihr durch ein Bett erwärmter Teilchen eines zermahlenen kohlehaltigen Materials, wodurch ein Bleibarren, eine zinkhaltige bleiverarmte Schlacke und Gas erzeugt werden,

   e) Trennen der in der Stufe (c) erzeugten Staubmischung vom Schmelz-Abgas und Rückführen der Stäube zur Stufe (c),

   wobei

   f) das Herstellen der feuchten Beschickung in der Stufe (a) durch Hinzufügen eines Sulfidpulvermaterials vorgenommen wird, um ein von 0,08 bis 0,87 reichendes Massenverhältnis zwischen der Summe von Sulfidschwefel, elementarem Schwefel und Pyritschwefel und dem Gesamtschwefelanteil und ein kohlehaltiges Pulvermaterial in einer Menge von 4 bis 12 kg reinen Kohlenstoffs je 100 kg dreiwertigen Eisens und von 20 bis 140 kg reinen Kohlenstoffs je 100 kg Sulfatschwefel zu erhalten.

2. Verfahren nach Anspruch 1, wobei ein kohlehaltiges Material mit einer im Bereich vom $5,78 \times 10^4$ bis $2,09 \times 10^5$ J/Mol (13,8 bis 50 kcal/Mol) liegenden Kohlenstoffvergasungsreaktions-Aktivierungsenergie als in der Stufe (f) zu verwendendes kohlehaltiges Pulvermaterial verwendet wird.

3. Verfahren nach Anspruch 1, wobei eine Beschickung mit einem Feuchtigkeitsanteil von 2 bis 16 % in der Stufe (b)

EP 0 641 865 B1

zum Trocknen zugeführt wird.

**Revendications**

1. Procédé pour le traitement de matières contenant du plomb dans lesquelles sont présents des sulfates simples et complexes et oxydes de métaux y compris les oxydes de fer supérieurs, comprenant les opérations consistant à :

   a) préparer une charge humide à partir de flux et de matières de départ contenant du plomb
   b) sécher la charge produite à l'étape (a) jusqu'à une teneur en humidité résiduelle inférieure à 1%
   c) procéder à la fusion éclair de la charge sèche dans une atmosphère d'oxygène, produisant ainsi une fusion d'oxydes en dispersion et un mélange de poussière et mise en fusion des gaz d'échappement
   d) procéder à la réduction du bain de fusion d'oxydes produit à l'étape (c) par sa filtration à travers un lit de particules chauffées de matières carbonifères écrasées de façon à produire un lingot de plomb, un laitier appauvri en plomb et contenant du zinc.
   e) séparer le mélange pulvérulent produit à l'étape (c) à partir de la fusion des gaz d'échappement et recycler les poussières à l'étape (c) ;
   procédé dans lequel,
   f) la préparation de la charge humide à l'étape (a) est effectuée en ajoutant une matière pulvérulente de sulfure pour obtenir le rapport de masse entre la somme de sulfure, de soufre élémentaire et pyrite et la teneur totale en soufre dans la charge de 0,08 à 0,87 et une matière pulvérulente carbonifère d'une quantité de 4 à 12 kg de carbone pur pour 100 kg de fer ferrique et 20 à 140 kg de carbone pur pour 100 kg de soufre de sulfate.

2. Procédé selon la revendication 1, dans lequel une matière carbonifère d'énergie d'activation de réaction de gazéification de carbone dans la plage de $5,78 \times 10^4$ à $2,09 \times 10^5$ J/mole (13,8 à 50 kcal/mole) est utilisée comme matière pulvérulente carbonifère à utiliser à l'étape (f).

3. Procédé selon la revendication 1, dans lequel une charge ayant une teneur en humidité de 2 à 16% est amenée au séchage à l'étape (b).

15

Rise in
temperature
per
length of the
flame °C/m

Fig. 1

Decrease in oxygen consumption, $nm^3/t$ of Pb

Increase in capacity in terms of lead, kg/h

Weight ratio of the sum of sulphide, elemental and pyrite sulphur to the total sulphur content in charge

Fig. 2